# NEUE EUROPÄISCHE PATENTSCHRIFT

(11) **EP 1 072 082 B2**
(45) Veröffentlichungstag und Bekanntmachung des Hinweises auf die Entscheidung über den Einspruch: **31.03.2010**
(45) Hinweis auf die Patenterteilung: 16.11.2005
(21) Anmeldenummer: 00910532.1
(22) Anmeldetag: 17.02.2000
(51) Int. Cl.: H02K 1/06

(54) **KONSTRUKTION EINER ELEKTRISCHEN MASCHINE MIT EINZELPOLWICKLUNGEN**
CONSTRUCTION OF AN ELECTRICAL MACHINE WITH INDIVIDUAL POLE WINDINGS
CONSTRUCTION D'UN MOTEUR ELECTRIQUE A ENROULEMENTS UNIPOLAIRES

(30) Priorität: 17.02.1999 DE 19906484
(43) Veröffentlichungstag der Anmeldung: 31.01.2001
(73) Patentinhaber: Römheld Beteiligungsgesellschaft mbH, 35321 Laubach (DE)
(72) Erfinder: EBERLE, Werner, D-75179 Pforzheim (DE)
(74) Vertreter: Geitz, Holger
(86) Internationale Anmeldenummer: PCT/DE2000/000447
(87) Internationale Veröffentlichungsnummer: WO 2000/049701

(56) Entgegenhaltungen:
- DE-B- 1 223 450
- DE-C- 875 227
- DE-C1- 3 929 331
- FR-A- 2 519 204
- US-A- 946 813
- US-A- 4 633 108
- PATENT ABSTRACTS OF JAPAN vol. 1996, no. 12, 26. Dezember 1996 (1996-12-26) & JP 08 223898 A (COPAL CO LTD), 30. August 1996 (1996-08-30)
- PATENT ABSTRACTS OF JAPAN vol. 018, no. 073 (E-1503), 7. Februar 1994 (1994-02-07) & JP 05 284677 A (YASKAWA ELECTRIC CORP), 29. Oktober 1993 (1993-10-29)

## Beschreibung

Die Erfindung betrifft eine elektrische Maschine gemäss den Merkmalen des Oberbegriffs des Anspruchs 1.

Eine derartige elektrische Maschine ist aus der DE-AS 1 181 312 vorbekannt. Durch den geschichteten und gleichzeitig segmentierten Aufbau eines Maschinenkörpers soll eine ausreichende Lüftung der elektrischen Maschine dadurch sichergestellt werden, daß einzelne Segmente des derart geschichteten Blechpakets verkürzt sind und hierdurch zusätzliche Lüftungskanäle eröffnet werden. Aus der JP08223898 A ist es bekannt, einen Stator im Wechsel mit bewickelten und unbewickelten Polen vorzusehen.

Eine ähnlich aufgebaute elektrische Maschine ist aus der deutschen Patentschrift DE-196 43 561 und aus FR 2519204 vorbekannt.

Im Zusammenhang mit elektrischen Maschinen ist es seit langem bekannt, Einzelpolwicklungen zur Vermeidung der Überschneidungen von Leitern vorzusehen, um eine besonders kompakte Wicklung zu erreichen. Problematisch im Zusammenhang mit derartigen Einzelpolwicklungen ist, daß infolge der zur Vergleichmäßigung der Flußdichte wünschenswert konstant breiten Polkerne du den sich folglich radial nach außen hin erweiternden Nuten zur Aufnahme der Wicklungen ein insgesamt unbefriedigender Nutfüllfaktor erzielt wird.

Ein weiteres Problem elektrischer Maschinen ist, daß im Falle eines Leitungsbruches entweder der Läufer oder der Rotor insgesamt ausgewechselt werden müssen, oder aber die betreffenden Teile vollständig neu bewickelt werden müssen.

In der DE-PS 196 43 561 wird daher zur Vermeidung dieser Nachteile eine elektrische Maschine vorgeschlagen, deren Läufer oder Rotor im wesentlichen aus zwei unterschiedlichen Segmenttypen aufgebaut ist. Dabei handelt es sich zum einen um ein fertig vorbewickeltes T-Segment, das mit Vorteil maschinenbewickelt sein kann, und zum anderen um ein X-Segment. Gemäß der Lehre dieser Patentschrift kann der Rotor oder Stator einer elektrischen Maschine in einfacher Weise dadurch hergestellt werden, daß die betreffenden Segmente zu einem Rotor oder Stator zusammengesteckt werden. Die Polsegmente werden dabei durch dünne Haltestifte miteinander zu einem Rotor oder Stator verbunden.

Der Vorteil dieser vorbekannten Lösung liegt darin, daß bereits fertig vorbewickelte, insbesondere maschinell bewickelte, Polsegmente eingesetzt werden können.

Diese Polsegmente können in Verbindung mit Innenläufer, Außenläufer oder sogar Axialflußmaschinen und Linearmotoren eingesetzt werden.

Im Wege der praktischen Realisierung dieser elektrischen Maschine erwies es sich jedoch als schwierig, einen Läufer oder Rotor aus den genannten Polsegmenten zusammenzufügen. Aufgrund der in Verbindung mit derartigen Bauelementen erreichbaren Fertigungstoleranzen war es nicht möglich ein kreisförmiges Maschinenelement zusammenzufügen. Der Läufer oder Rotor einer elektrischen Maschine ließ sich demnach aus den beschriebenen Polsegmenten nicht zusammensetzen.

Die Anzahl der einzelnen Segmente kann zur Erleichterung des Zusammenfügens auch nicht einfach reduziert werden, da sie in unmittelbarer Beziehung zu der jeweils gewünschten Polteilung bzw. Polzahl der jeweiligen elektrischen Maschine steht. Darüber hinaus führt die genannte Segmentierung eines weichmagnetischen Körpers der elektrischen Maschine zu erheblichen Schwankungen der Luftspaltbreite. Dies ist insbesondere in Verbindung mit schnellaufenden elektrischen Maschinen nicht hinnehmbar. Eine über den Umfang des Läufers schwankende Luftspaltbreite führt darüber hinaus zu den Wirkungsgrad beeinträchtigenden Streuverlusten sowie etwaigen Gleichlauf- und Leistungsschwankungen der elektrischen Maschine.

Der Erfindung liegt daher die Aufgabe zugrunde, den vorteilhaften Aufbau einer elektrische Maschine mit zumindest einem segmentweise aufgebauten Körper einem möglichst breiten Anwendungsfeld zu erschließen. Die Lösung der Aufgabe gelingt gemäss den Merkmalen des Anspruchs 1. Vorteilhafte Ausgestaltungen können den Unteransprüche entnommen werden.

Bei einer elektrischen Maschine gemäss dem Oberbegriff des Hauptanspruchs sind die Trägersegmente der elektrischen Maschine so gefertigt sind, daß die Wicklungsträger für Linearmotoren und rotatorische Maschinen gleichermaßen nutzbar sind. Hierdurch wird eine Fertigung nach dem Baukastenprinzip möglich. Darüber hinaus sind die Wicklungsträger lösbar befestigt, so daß einzelne Wicklungsträger im Falle eines Leiterbruchs oder sonstiger Mängel ausgetauscht werden können. Darüber hinaus kann die Bestückung der elektrischen Maschine mit Wicklungsträgern in Abhängigkeit von der jeweils gewünschten Leistungsdichte erfolgen. Die Modulbauweise erlaubt also zunächst eine genaue Anpassung an den Einbauraum bzw. die jeweiligen Anforderungen, wobei im weiteren die Bestückung der Maschine an diese Parameter genaue angepaßt werden kann. Die vorliegende Maschine kann demnach bei nahezu unveränderter Fertigung nahezu beliebig variiert werden.

Gemäß dieser erfindungsgemäßen Lösung wird zwischen Trägersegmenten zum segmentweisen Aufbau eines Aufnahmekörpers und Wicklungsträgern unterschieden. Ein erfindungsgemäßes Trägersegment ist jeweils zur Aufnahme von mehreren, zumindest zwei Wicklungsträgern, geeignet.

Hierdurch können die Trägersegmente, jeweils entkoppelt von der jeweiligen Polteilung, derart dimensioniert werden, daß sie jeweils mehr als eine Polteilung der elektrischen Maschine überdecken. In Verbindung mit rotierenden elektrischen Maschinen kann somit der Rotor oder Stator aus zwei, vier, sechs, acht oder einer sonstig wählbaren, aber aus Fertigungsgründen möglichst geringen Anzahl von Trägersegmenten zusammengesetzt sein.

Die Wahl der jeweiligen Anzahl zusammenzufügender Trägersegmente ist dabei völlig unabhängig von der jeweiligen Polzahl der elektrischen Maschine, da in die Trägersegmente bis zu einer lediglich durch die Größe des Trägersegmentes bestimmte Anzahl von Wicklungsträgern eingesetzt werden kann.

Im Unterschied zum Stand der Technik können sich somit die im Rahmen der üblicher Fertigungstoleranzen unvermeidlichen Abweichungen der Abmessungen vom Idealmaß der zum Zusammenbau des Maschinenkörpers benötigten Einzelteile nicht derart aufsummieren, daß im Ergebnis der Maschinenkörper nicht zusammengefügt werden kann. Die Anzahl der verwendeten Trägersegmente wird hierzu unabhängig von der Polzahl der Maschine je nach Fertigungsgenauigkeit und Toleranzen so gewählt, daß der betreffende Körper der elektrischen Maschine sicher zusammengefügt werden kann.

Vorteilhafte Ausgestaltungen der erfindungsgemäßen Lehre sind gemäß den nachfolgenden Unteransprüchen gegeben.

Dadurch, daß jedes Trägersegment für sich die jeweiligen Hohlräume vollständig ausbildet, ist ein leichtere Zusammenfügen der Maschine gewährleistet, als wenn auch wischen den Segmenten entsprechende Hohlräume ausgebildet würden.

Der modulare Aufbau der Maschine wird noch effizienter, wenn die Maschine mittels vorgefertiger Blechpaketen zusammensetzbar ist.

In vorteilhafter Ausgestaltung sind die Wicklungsträger bereits vollständig bewickelt, bevor sie in den jeweiligen Aufnahmekörper eingesetzt werden. Die Wicklungsträger können separat und maschinell, insbesondere in Flyer-Technik, bewickelt werden.

Die Bewicklung als solche aber auch die betriebsfeste Halterung der Wicklungen ist dadurch erleichtert , daß die Wicklungsträger jeweils ausgeprägte Spulenköpfe aufweisen.. Die Ausgestaltung der Wicklungsträger als Einzelpolwicklungen gestattet die Ausbildung flacher Spulenköpfe und damit äußerst kompakte Maschinenbauformen

Die Wicklungsträger können in einfacher Weise mittels Steckstiften lösbar und betriebsfest mit dem jeweiligen Aufnahmekörper verbunden werden.

In Verbindung mit mehrphasigen Maschinen kann es erforderlich sein, auf einem einzigen Wicklungsträger mehrere getrennte Wicklungen anzuordnen. Auch dies ist dadurch erheblich erleichtert, daß die Wicklungsträger separat vorbewickelt werden können.

Auch bei einem derartigen Mascheninaufbau soll aufgrund der besonderen Ausformung vdn Wicklungsträger und Aufnahmekörper eine geschlossen Oberfläche gegenüber dem Luftspalt ausgebildet werde, Dies stellt eine gleichmäßige Duchflutung und damit den Gleichlauf der Maschine sicher.

Alternativ oder zusätzlich können die Wicklungsträger jeweils mittels eines Überstandes gesichert werden, der jeweils in eine entsprechende Führungsnut des Aufnahmekörpers greift.

Auf dem Wicklungsträger können mit Vorteil mehrere unterscheidbare Wicklungen angeordnet werden.

In weiterer Fortbildung dieser Ausgestaltung werden die Polkerne der aktiven Polsegmente mit einem Flachdraht umwickelt. Im Unterschied zu Runddrähten vermeidet die genannte Flachdrahtwicklung etwaige Hohlraumausbildungen im Nutraum. Hierdurch kann der vorzugsweise einen rechteckförmigen Querschnitt aufweisende glattrandige Nutraum optimal verfüllt werden. Ein hoher Nutfüllfaktor steigert den Wirkungsgrad der jeweiligen elektrischen Maschine.

Dadurch, daß die Aufnahmekörper jeweils als geschichtete Blechpakte derart aufgebaut sind, daß die einzelnen Schichten unter Freilassung des zur Aufnahme des fertig bewickelten Polkerns der Wicklungsträger vorgesehenen Hohlraums versetzt angeordnet sind, werden die Trägersegmente insgesamt als Blechpakete von jeweils höchster Dichte aufgebaut. Die Vermeidung von zusätzlichen Luftspalten zwischen den benachbarten Trägersegmenten und die hierdurch erzielte Verzahnung steigert die mögliche Durchflutung des jeweiligen elektrischen Körpers aufgrund der erhöhten relativen Permabilitätskonstante µᵣ erheblich. Außerdem ist die maschinelle Festigkeit des entsprechend verzahnten Aufnahmekörpers erhöht.

In weiter Ausgestaltung dieser vorteilhaften Weiterbildung kann die Stärke der zum Aufbau der Aufnahmekörper jeweils eingesetzten Blechstapel in Abhängigkeit von der jeweils gewünschten Maschinenleistung frei gewählt werden. Die einzuschiebenden Wicklungsträger bleiben bis zu einer gewissen Grenze hiervon unberührt.

Eine weitere Steigerung des Wirkungsgrads der entsprechend aufgebauten elektrischen Maschine ergibt sich dadurch, daß die einzelnen Aufnahmekörper aus kornorientierten Trafoblechen aufgebaut werden können, wobei aufgrund der segmentweisen Anordnung die Orientierung auch nicht über den Umfang des Körpers der elektrischen Maschine verloren wird.

In weitere Ausgestaltung kann im Rahmen der Erfindung ohne weiteres eine kompensierte elektrische Maschine dadurch aufgebaut werden, daß der Aufnahmekörper derart aufgebaut wird, daß beidseits Wicklungsträger, also sowohl radial innen- als auch radial außenliegend bzw. bei Linermotoren innen- und außenliegend, in den jeweiligen Aufnahmekörper eingeschoben werden können.

Durch den modularen Aufbau der Maschine und die gleichzeitig nahezu beliebige Anpassung an die jeweils geforderte Leistungsdichte kann die Maschine überall dort eingesetzt werden wo eine perfekte Anpassung an den jeweiligen Bauraum notwendig ist. In der Ausführung als Linearmotor kann sie beispielsweise als Direktantrieb in einer geschlossenen Handhabungsachse montiert werden, anstelle neben der handhabungsachse einen weiteren Linearmotor zübauen. Insbeosndere in einer aggresssiven Umgebung bietet eine völlig geschlossene Ausführung viele Vorteile.

Gemäß Anspruch kann die erfindungsgemäße elektrische Maschine mit Vorteil als Linearmotor ebenso wie als Innen- oder Außenläufermotor eingesetzt werden. Ebenso können auch Synchron-, Asynchron-, permanent erregte oder elektronisch kommutierte elektrische Maschinen oder Direktantriebe aufgebaut werden. Im Falle einer entsprechenden Beschaltung der Wicklungsträger kann die erfindungsgemäße elektrische Maschine in einfacher Weise auch als kompensierter Motor aufgebaut werden.

Die Erfindung wird nachstehend anhand einiger in der Zeichnung nur ausschnittsweise dargestellter Ausführungsbeispiele näher erläutert.

Es zeigen:
Fig. 1 einen Ausschnitt eines rotatorischen Primärteils einer elektrischen Maschine mit zwei Trägersegmenten zum Aufbau eines derartigen Primärteils in einer Querschnittansicht,
Fig. 2 eine Detailansicht eines Trägersegements mit einem diesem zugeordneten Wicklungsträger,
Fig. 3 ein Trägersegment mit eingesetzten Wicklungsträger für ein rotatorisches Primärteil,
Fig. 4 ein Trägersegment mit eingesetzten Wicklungsträgern für einen Linearmotor in einer Querschnittansicht und
Fig. 5 einen Aufnahmekörper mit eingesetzten Wicklungsträgern zum Aufbau eines kompensierten Linearmotors im Querschnitt.
   Die elektrischen Maschinen gemäss den Fig. 1-5 sind als nicht zur Erfindung gehörig anzusehen.
Fig. 6 einen modifizierten Wicklungsträger in einer Querschnittansicht,
Fig. 7 ein entsprechend modifiziertes Trägersegment für einen Linearmotor in einer Querschnittansicht und
Fig. 8 ein entsprechend modifiziertes Trägersegment für eine rotatorische Maschine in einer Querschnittansicht.

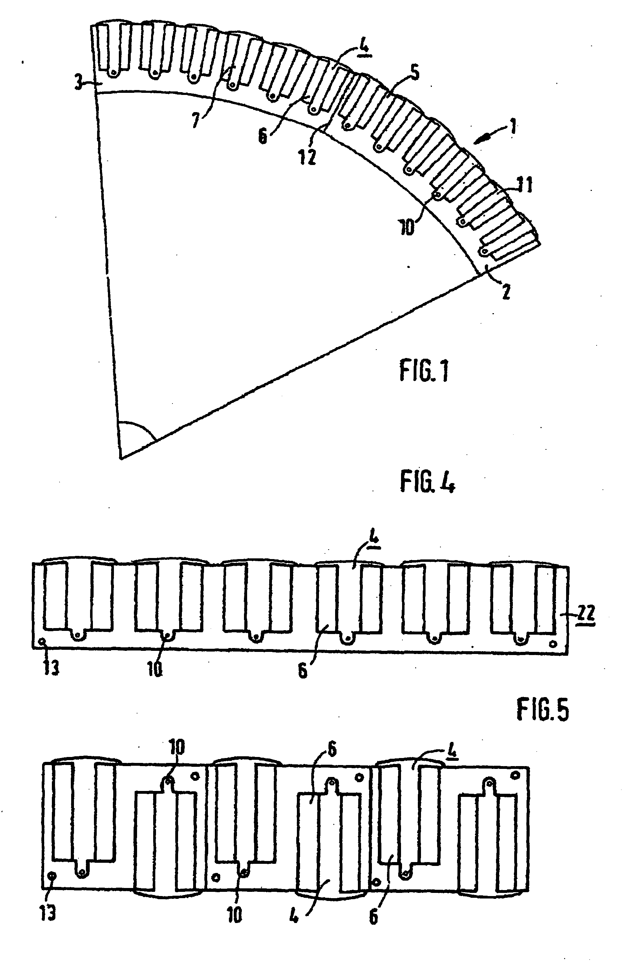

Fig. 1 zeigt den Ausschnitt eines rotatorischen Primärteils einer elektrischen Maschine. Der Ausschnitt zeigt ungefähr 60° des Vollkreises des Primärteils 1. Dieser Bereich des Primärteils 1 ist im wesentlichen aus zwei Trägersegmenten 2 und 3 zusammengesetzt, die jeweils zur Aufnahme von bereits fertig bewickelten Wicklungsträgern 4 geeignet sind. Die beiden Trägersegmente 2 und 3 übergreifen in dem hier vorliegenden Ausführungsbeispiel einen Bereich von ca. 30°, so daß das gesamte Primärteil aus 12 derartigen Trägersegmenten 2, 3 zusammengesetzt werden kann.

Die Anzahl der sich zu einem vollständigen, hier rotatorischen Primärteil ergebenden Trägersegmente 2, 3 kann unabhängig von der jeweils gewünschten Polteilung durch entsprechende Dimensionierung der Trägersegmente 2, 3 beliebig gewählt werden. Die Trägersegmente 2, 3 sind im wesentlichen aus zahnförmigem kornorientiertem Trafoblech aufgebaut, wobei zwischen den einzelnen Zähnen 5 der Trafobleche Hohlräume 6 zur Aufnahme der Wicklungsträger 4 vorgesehen sind. Die Wicklungsträger 4 werden mit ihrem stempelartigen Polkern 7 in die Hohlräume 6 derart eingeschoben, daß der beidseits der Polkerne 7 verbleibende Hohlraum 6 die Nut für die jeweiligen Einzelpolwicklungen darstellt.

Die Polkerne 7 weisen ebenso wie die Trägersegmente 2, 3 Aussparungen zur Aufnahme von Steckstiften 10 auf, die zur Verbindung der Wicklungsträger 4 mit dem jeweiligen Trägwersegmenten 2 oder 3 dienen.

Die Polkerne 7 sind maschinell vorbewickelt. Sie sind vorzugsweise in Flyer-Technik mit einer Flachdrahtwicklung versehen, die einerseits den Polkern 7 weitestgehend vollständig umschließt und andererseits den verbleibenden Hohlraum 6 möglichst vollständig ausfüllt. Die in diesem Ausführungsbeispiel vorgeschlagene Flachdrahtwicklung ist zu einer optimalen Ausfüllung der jeweiligen Hohlräume 6 geeignet.

Wie bereits erwähnt, sind die Trägersegmente 2, 3 jeweils aus ausgestanztem kornorientiertem dünnen Trafoblech geschichtet gefertigt. Dabei können auch bereits vorgeschichtete Blechpakete eingesetzt werden. Die Trägersegmente 2 oder 3 werden jeweils derart aufgebaut, daß die genannten Trafobleche zu einem Blechpaket übereinandergeschichtet werden. Dabei werden die einzelnen Schichten zum Aufbau der Aufnahmekörper jeweils um eine Polteilung versetzt übereinander angeordnet, so daß jeweils ein Hohlraum 6 zur Aufnahme eines Wicklungsträgers 4 freigelassen bleibt. Durch den Versatz der einzelnen Blechschichten wird jeweils eine Verzahnung der benachbarten Trägersegmente 2, 3 derart erreicht, daß die zwischen den einzelnen Trägersegmente 2 oder 3 befindlichen Stoßkanten 12 verzahnt und nahezu vollständig geschlossen werden. Hierdurch wird eine bessere Durchflutung des weichmagnetischen Aufnahmekörpers insgesamt ermöglicht.

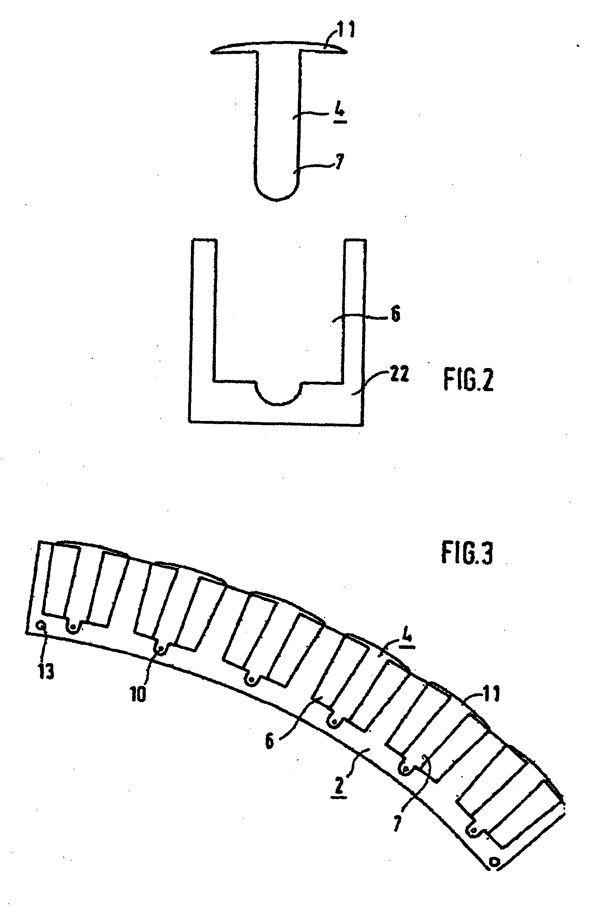

Fig. 2 zeigt in einer Detailansicht den zur Aufnahme eines einzigen Wicklungsträgers 4 geeigneten Ausschnitt eines Trägersegments 22 für einen Linearmotor. Das Trägersegment 22 weist jeweils Hohlräume 6 zur Aufnahme des Polkerns 7 der Wicklungsträger 4 auf. Die Wicklungsträger 4 werden dabei derart in den Hohlraum 6 eingeschoben, daß die Polkerne 7, in hier nicht weiter dargestellter Weise, mit einer Flachdrahtwicklung versehen, jeweils vollständig in dem Hohlraum 6 aufgenommen sind. Die Wicklungsträger 4 werden dabei jeweils mittels eines Steckstiftes 10 in ebenfalls hier nicht dargestellter Weise mit dem jeweiligen Trägersegment 22 betriebsfest aber lösbar verbunden. Die Montage der Wicklungsträger 4 erfolgt in Verbindung mit dem Trägersegment 22 analog zum Aufbau rotatorischer Maschinenkörper.

Gemäß der insbesondere aus Fig. 2 ersichtlich einfachen Montage der Wicklungsträger 4 in den Trägersegmenten 2, 3 oder 22 können im Falle eines Leiterbruchs oder einer sonstigen Isolationsbeschädigung der Wicklung die betroffenen Wicklungsträger 4 einfach komplett ausgetauscht werden. Außerdem kann durch entsprechende Bestückung der Trägersegmente 2 oder 3 mit Wicklungsträgern 4 die Polteilung bzw. das maximal verfügbare Drehmomenten der jeweiligen elektrischen Maschine in einfacher Weise variiert werden.

Fig. 3 zeigt einen Trägersegment 2 mit eingesetzten Wicklungsträger 4. Die Wicklungsträger 4 sind über Steckstifte 10 lösbar aber betriebsfest mit dem Trägersegment 2 verbunden. Innerhalb des Rotorjochs am Innenkreis des Trägersegments 2 sind Aussparungen 13 zur Aufnahme von nicht weiter dargestellten Verbindungsstiften vorgesehen.

Mittels der Aussparungen 13 und den erwähnten Verbindungsstiften können die Trägersegmente 2, 3 zu einem rotatorischen elektrischen Aufnahmekörper miteinander verbunden werden.

Fig. 4 zeigt den analogen Aufbau eines Trägersegments 22 für einen Linearmotor. Auch hier sind im Jochbereich, am Innenkreis des Trägersegments 2 oder 3, Aussparungen 13 für Verbindungsstifte zur Verbindung mit den jeweils benachbarten Trägersegments und zum Aufbau des geschichtet angeordneten Blechstapels vorgesehen.

Gemäß einer alternativen Ausführung der Trägersegmente 2, 3 oder 22 können gemäß der erfindungsgemäßen Lehre auch kompensierte elektrische Maschinen aufgebaut werden.

Hierzu weisen die Trägersegmente 22 jeweils beidseits, also auf der Maschinen-Innen- und -Außenseite, Hohlräume 6 zur Aufnahme von Wicklungsträgern 4 auf. Die auf der jeweils anderen Seite eingeschobenen Wicklungsträger 4 stellen gegenüber den auf der jeweils anderen Seite eingeschobenen Wicklungsträgern 4 Kompensationswicklungen dar. Auf diese Weise kann in einfacher Art ein je nach Wunsch entsprechend kompensierter elektrischer Motor aufgebaut werden.

Je nach Bestückung des segmentweise zusammengesetzten Aufnahmekörpers ist die elektrische Maschine mehr oder minder kompensiert.

In analoger Weise kann auch ein rotatorischer elektrischer Körper zum Aufbau einer entsprechenden rotatorischen kompensierten elektrischen Maschine gefertigt werden.

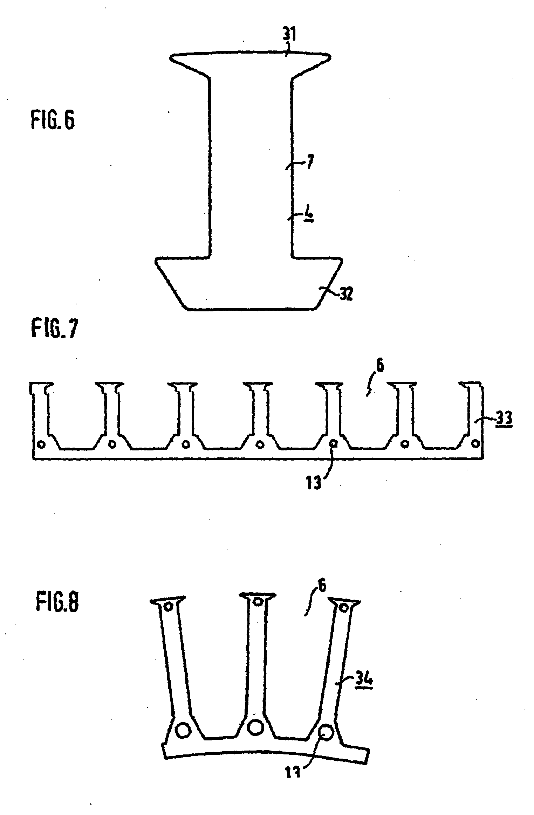

Figur 6 zeigt eine modifizierte Ausbildung eines Wicklungsträgers 4, bei dem der Polkern 7 einen zumindest weitgehend rechteckförmiges Profil besitzt, dessen Querseiten jeweils von einem gleichschenkligen Trapezstück (31, 32) begrenzt sind, wobei das dem Luftspalt der elektrischen Maschine zugewandte Trapezstück 31 den Spulenkopf bildet und das andere Trapezstück 32 dem Joch des Trägersegments zugewandt ist. Die dem Luftspalt zugewandte Oberfläche des Spulenkopfs kann dabei im Querschnitt in Form eines Kreisabschnitts ausgebildet sein, dessen Krümmung vom jeweiligen Maschinenumfang abhängt. Auf diese Weise wird in Verbindung mit den unbewickelten Polen der Trägersegemente ein gleichmäßiger Luftspaltverlauf gewahrt.

Der Wicklungsträger 4 kann identisch für das Trägersegment 33 eines Linearmotors gemäß Fig. 7 oder das Trägersegment 34 einer rotatorischen Maschine gemäß Fig. 8 eingesetzt werden, wobei die jeweiligen Grundprofile allenfalls im Hinblick auf den jeweiligen Maschinenumfang angepaßt werden müssen.

Gemäß den vorstehenden Ausführungsbeispielen ist eine elektrische Maschine beschrieben, deren Läufer oder Rotor oder deren einer elektrischer Körper im Falle eines Linearmotors in einfacher Weise durch die Verbindung von entsprechenden Trägersegmenten 2, 3, 22, 33, 34 modulweise aufgebaut werden kann. In diese Trägersegmente 2, 3, 22, 33, 34 können maschinell vorbewickelte Wicklungsträger 4 je nach gewünschter Polteilung, Maschinenkraft oder Kompensationswirkung eingeschoben werden. Etwaig beschädigte Wicklungsträger 4 können in einfacher Weise ausgetauscht werden. Dadurch daß die Größe der einzelnen Trägersegmente 2, 3, 22, 33 oder 34 von der jeweils gewünschten Polteilung gemäß der erfindungsgemäßen Lehre vollständig entkoppelt ist, können die einzelnen Trägersegmente 2,3, 22, 33 oder 34 bei üblichem Fertigungsaufwand so gefertigt werden, daß sich ein Luftspalt konstanter Weite bzw. mit den erforderlichen Toleranzen ergibt.

Außerdem kann mittels der bedarfsweise angepaßten Segmentierung des jeweiligen elektrischen Körpers der elektrischen Maschine der gewünschte elektrische Körper sicher zusammengesetzt werden, ohne daß für das Zusammenfügen im Elektromaschinenbau nicht übliche Fertigungsgenauigkeiten gefordert werden müßten. Selbst ein rotatorischer Läufer oder Stator kann hierdurch der beschriebenen vorteilhaften Segmentbauweise einfach hergestellt und sicher zusammengefügt werden. Die Luftspaltweite bleibt dabei je nach Anzahl der zusammenzufügenden Aufnahmekörper über den ganzen Umgang des elektrischen Körpers hinreichend konstant.

Die genannte Segmentbauweise ermöglicht es, Maschinen unterschiedlicher Radien, Bestückung und Drehmomente mit den immer gleichen Wicklungsträgern 4 herzustellen. Hierdurch wird der Anwendungsbereich für die genannten Wicklungsträger 4 und damit die zu fertigende Stückzahl beträchtlich erhöht.

Dies führt zu einer weiteren Reduzierung der Fertigungskosten. Gemäß den vorstehenden Ausführungsbeispielen können die Wicklungsträger 4 sogar sowohl für lineare elektrische Körper als auch rotierende elektrische Körper eingesetzt werden.

Dies führt zu einer abermaligen Verbreiterung des Anwendungsbereiches sowie zu der gewünschten Erhöhung der zu fertigenden Stückzahl, zumindest hinsichtlich der Fertigung der beschriebenen Wicklungsträger 4.

### BEZUGSZEICHENLISTE

- 1: Primärteil
- 2: Aufnahmekörper
- 3: Aufnahmekörper
- 4: Wicklungsträger
- 5: Zahn
- 6: Hohlraum
- 7: Polkern

- 10: Steckstift
- 11: Spulenkopf
- 12: Stoßkante
- 13: Aussparung

- 22: Aufnahmekörper
- 31: luftspaltseitiges Trapezstück
- 32: jochseitiges Trapezstück
- 33: modifiziertes Trägersegment für Linearmotor
- 34: modifiziertes Trägersegment für rotatorische Ma- schine

## Patentansprüche

1. Elektrische Maschine mit einer Einzelpolwicklung die im wesentlichen aus zwei Körpern aufgebaut ist, wobei zumindest einer dieser Körper geschichtet als Blechpaket aufgebaut ist und zumindest einer der Körper als Aufnahmekörper im wesentlichen aus wenigstens zwei Trägersegmenten (2, 3) segmentweise zusammengesetzt ist, wobei jedes dieser für sich ebenfalls geschichtet aufgebauten Trägersegmente (2, 3, 33, 34) zur betriebsfesten Aufnahme von wenigstens zwei jeweils separat bewickelbaren Wicklungsträgern (4) in entsprechenden Hohlräumen (6) geeignet ist, wobei die Wicklungsträger (4) in den Hohlräumen (6) lösbar befestigt sind wobei das Profil des Wicklungsträgers (4) längsseitig jeweils von einem gleichschenkligen Trapezstück (31, 32) begrenzt ist, zwischen welchen ein zumindest annähernd rechteckiges Mittelteil, das den Polkern (7) ausbildet, liegt, und die Hohlräume (6) ein zur formschlüssigen Aufnahme des - bei bestimmungsgemäßer Montage - zum Joch des Aufnahmekörpers weisenden Trapezstücks (32) sowie des Polkerns (7) geeignetes Profil aufweisen **dadurch gekennzeichnet, dass** die Querschnitte dieser Hohlräume (6) der Trägersegmente (2, 3, 32, 34) jeweils derart weitgehend rechteckförmig dimensioniert sind, dass die wicklungsträger (4) der elektrischen Maschine gleichermaßen zum Aufbau einer rotatorischen elektrischen Maschine wie zum Aufbau einer linearen elektrischen Maschine geeignet sind und hierdurch die Wicklungsträger (4) für beide Maschinentypen gleichermaßen einsetzbar sind und die Hohlräume (6) für die Wicklungsträger (4) jeweils durch ein Joch sowie jeweils zwei benachbarte nicht bewickelte Pole des jeweiligen Trägersegmentes (2, 3, 33, 34) begrenzt sind wobei das vom Joch wegweisende Trapezstück (32), das den Spulenkopf (11) ausbildet, mit den Oberflächen der benachbarten, nicht bewickelten Pole des Aufnahmekörpers eine zum Luftspalt der elektrischen Maschine weisende, geschlossene Oberfläche ausbilden.

2. Elektrische Maschine nach Anspruch 1, **dadurch gekennzeichnet, dass** die zum Aufbau der Wicklungsträger (4) und/oder Trägersegmente (2, 3, 33, 34) eingesetzten Blechschichten aus vorkonfigurierten Blechpaketen aufgebaut sind und die elektrische Maschine zumindest teilweise aus diesen Blechpaketen modulweise zusammengefügt ist.

3. Elektrische Maschine nach einem der vorhergehenden Ansprüche, **dadurch gekennzeichnet, dass** die in den Hohlräumen (6) der elektrischen Maschine eingesetzten Wicklungsträger (4) vor ihrer jeweiligen Montage bereits vollständig, vorzugsweise maschinell, bewickelt sind.

4. Elektrische Maschine nach Anspruch 3, **dadurch gekennzeichnet, dass** die Wicklungsträger (4) jeweils als Profilkörper mit einem Spulenkopf (11) und einem Polkern (7) ausgebildet sind.

5. Elektrische Maschine nach Anspruch 3 oder 4, **dadurch gekennzeichnet, dass** die Wicklungsträger (4) jeweils betriebsfest aber lösbar, vorzugsweise mittels Steckstiften (10), mit dem jeweiligen Aufnahmekörper (2, 3) verbunden sind.

6. Elektrische Maschine nach einem der vorhergehenden Ansprüche 3 bis 5, **dadurch gekennzeichnet, dass** die zum Joch des Aufnahmekörpers weisende Oberfläche des Wicklungsträgers (4) jeweils mit einem Überstand versehen ist, die - bei bestimmungsgemäßer Montage - mit einer korrespondierenden Führungsnut im Jochbereich des Aufnahmekörpers in Eingriff steht.

7. Elektrische Maschine nach einem der vorhergehenden Ansprüche 3 bis 6, **dadurch gekennzeichnet, dass** auf zumindest auf einem Teil der Wicklungsträger (4) mehrere unterscheidbare Wicklungen angeordnet sind.

8. Elektrische Maschine nach einem der vorhergehenden Ansprüche 3 bis 7, **dadurch gekennzeichnet, dass** die Wicklungsträger (4) mit einer Flachdrahtwicklung versehen sind.

9. Elektrische Maschine nach einem der vorhergehenden Ansprüche, **dadurch gekennzeichnet, dass** die als geschichtete Blechpakete aufgebauten Trägersegmente (2, 3, 33, 34) derart ausgebildet sind, dass die einzelnen Schichten unter Freilassung der zur Aufnahme der Wicklungsträger (4) vorgesehenen Hohlräume (6) derart versetzt angeordnet sind, dass über den Umfang oder die Länge der elektrischen Maschine gesehen jede einzelne Schicht eines jeden Trägersegmentes (2, 3, 33, 34) wiederum segmentweise aufgebaut ist und die Segmente der einen Schicht gegenüber der jeweils benachbarten Schicht, vorzugsweise um eine Polteilung, versetzt angeordnet sind.

10. Elektrische Maschine nach Anspruch 9, **dadurch gekennzeichnet, dass** die Anzahl der jeweils zum Aufbau der Aufnahmekörper (2, 3, 33, 34) eingesetzten Blechschichten in Abhängigkeit von der jeweils geforderten Maschinenleistung frei wählbar ist.

11. Elektrische Maschine nach Anspruch 9 oder 10, **dadurch gekennzeichnet, dass** die Trägersegmente (2, 3, 33, 34) jeweils aus Schichten von zahnförmig ausgestanzten Trafoblechen, vorzugsweise aus kornorientiertem Blech, aufgebaut sind.

12. Elektrische Maschine nach einem der Ansprüche 9 bis 11, **dadurch gekennzeichnet, dass** die Trägersegmente sowohl auf der dem Maschineninneren, als auch der dem Maschinenäußeren zugewandten Seite über den Umfang verteilt mit Hohlräumen (6) zur Aufnahme von Wicklungsträgern (4) zum Aufbau einer kompensierten elektrischen Maschine versehen sind.

13. Verwendung der gemäß den Ansprüchen 1 bis 12 segmentweise aufgebauten elektrischen Maschine als Linearmotor innerhalb einer geschlossenen Handhabungsachse.

14. Verwendung der gemäß den Ansprüchen 1 bis 12 segmentweise aufgebauten elektrischen Maschine als Innen- oder Außenläufermotor, Linearmotor, Synchron- oder Asynchronmaschine, Direktantrieb, permanent erregte Maschine oder elektronisch kommutierte Maschine.

## Claims

1. Electrical machine with a single pole winding constructed substantially from two bodies, wherein at least one of these bodies is constructed in layered form as a laminated core and at least one of the bodies is assembled in segmented manner as a receiving body substantially from at least two carrier segments (2, 3), wherein each of these carrier segments (2, 3, 33, 34) similarly individually of layered construction is suitable for operationally fixed reception of at least two winding carriers (4), which can be respectively separately wound in corresponding cavities (6), the winding carriers (4) being detachably fastened in the cavities (6) and the profile of the winding carrier (4) is bounded at the longitudinal side each time by an equilateral trapezium member (31, 32), between which there is disposed an at least approximately rectangular centre part forming the pole core (7), and the cavities (6) have a profile suitable for shape-locking reception of the trapezium member (32) which in the case of mounting in intended manner faces towards to the yoke of the receiving body, as well as of the pole core (7), **characterised in that** the cross-section of these cavities (6) of the carrier segments (2, 3, 32, 34) are each time of substantially rectangular dimension in such a manner that the winding carriers (4) of the electrical machine are equally suitable for construction of a rotary electrical machine and for construction of a linear electrical machine and the winding carriers (4) are thereby equally usable for both machine types and the cavities (6) for the winding carriers (4) are each bounded by a respective yoke as well as by two adjacent unwound poles of the respective carrier segment (2, 3, 33, 34), wherein **in that** case the trapezium member (32), which faces away from the yoke and forms the coil head (11), forms together with the surfaces of the adjacent unwound poles of the receiving body a closed surface facing towards the air gap of the electrical machine.

2. Electrical machine according to claim 1, **characterised in that** the lamination layers used for construction of the winding carrier (4) and/or carrier segments (2, 3, 33, 34) are constructed from pre-configured laminated cores and the electrical machine is composed in modular manner at least partly from these laminated cores.

3. Electrical machine according to one of the preceding claims, **characterised in that** winding carriers (4) inserted into the cavities (6) of the electrical machine are completely wound, preferably by machine, before their respective mounting.

4. Electrical machine according to claim 3, **characterised in that** the winding carriers (4) are each constructed as profile bodies with a coil head (11) and a pole core (7).

5. Electrical machine according to claim 3 or 4, **characterised in that** the winding carriers (4) are each connected in operationally fixed, but detachable manner, preferably by means of plug pins (10), with the respective receiving body (2, 3).

6. Electrical machine according to one of the preceding claims 3 to 5, **characterised in that** the surface, which faces towards the yoke of the receiving body of the winding carrier (4) is provided with a respective projection which - in the case of mounting in intended manner - is disposed in engagement with a corresponding guide groove in the yoke region of the receiving body.

7. Electrical machine according to one of the preceding claims 3 to 6, **characterised in that** several different windings are arranged on at least a part of the winding carriers (4).

8. Electrical machine according to one of the preceding claims 3 to 7, **characterised in that** the winding carriers (4) are provided with a flat wire winding.

9. Electrical machine according to one of the preceding claims, **characterised in that** the carrier segments (2, 3, 33, 34) constructed from layered lamination cores are constructed in such a manner that the individual layers are arranged to be offset, while leaving free the cavities (6) provided for reception of the winding carriers (4), in such a manner that as seen over the circumference or the length of the electrical machine each individual layer of each carrier segment (2, 3, 22, 33, 34) is in turn of segmental mode of construction and the segments of a layer are arranged to be offset relative to the respectively adjacent layer preferably by one pole pitch.

10. Electrical machine according to claim 9, **characterised in that** the number of lamination layers respectively used for construction of the receiving bodies (2, 3, 33, 34) is freely selectable in dependence on the respectively required machine performance.

11. Electrical machine according to claim 9 or 10, **characterised in that** the carrier segments (2, 3, 33, 34) are each constructed from layers of tooth-shaped, punched-out transformer plates preferably of grain-oriented plate.

12. Electrical machine according to one of claims 9 to 11, **characterised in that** the carrier segments distributed over the circumference not only on the side facing the machine interior, but also on the side facing the machine exterior, are provided with cavities (6) for reception of winding carriers (4) for construction of a compensated electrical machine.

13. Use of the electrical machine, which is of segmental mode of construction in accordance with claims 1 to 12, as a linear motor within a closed handling axle.

14. Use of the electrical machine, which is of segmental construction in accordance with claims 1 to 12, as an internal or external rotor motor, linear motor, synchronous or asynchronous machine, direct drive, permanently excited machine or electrically commutated machine.

## Revendications

1. Machine électrique comprenant un enroulement unipolaire qui est constitué essentiellement de deux corps, au moins l'un de ces corps étant constitué de façon stratifiée comme un paquet de tôles et au moins l'un des corps étant composé en tant que corps de logement essentiellement d'au moins deux segments supports (2, 3) par segments, chacun de ces segments supports (2, 3, 33, 34) conçus également de façon stratifiée étant approprié pour le logement résistant au fonctionnement d'au moins deux supports d'enroulement pouvant être enroulés chacun séparément dans des cavités (6) appropriées, les supports d'enroulement (4) étant fixés de façon amovible dans les cavités (6) et le profil du support d'enroulement (4) est délimité côté longueur respectivement par une pièce trapézoïdale (31, 32) isocèle, entre laquelle est située une partie centrale au moins approximativement rectangulaire, qui forme le noyau polaire (7), et les cavités (6) présentent un profil approprié pour le logement par complémentarité de forme de la pièce trapézoïdale (32) dirigée vers la culasse du corps de logement - dans le cas d'un montage approprié - et du noyau polaire (7), **caractérisé en ce que** les sections de ces cavités (6) des segments supports (2, 3, 32, 34) sont dimensionnées chacune avec une forme largement rectangulaire de telle sorte que les supports d'enroulement (4) de la machine électrique sont appropriés de la même façon pour la mise en place d'une machine électrique rotative et pour la mise en place d'une machine électrique linéaire et de ce fait les supports d'enroulement (4) peuvent être utilisés de la même façon pour les deux types de machines et les cavités (6) pour les supports d'enroulement (4) sont délimitées chacune par une culasse et respectivement deux pôles voisins, non enroulés, du segment support (2, 3, 33, 34) concerné, la pièce trapézoïdale (32) disposée en partant de la culasse, qui forme la tête de bobine (11), formant avec les surfaces des pôles voisins, non enroulés, du corps de logement une surface fermée et dirigée vers l'entrefer de la machine électrique.

2. Machine électrique selon la revendication 1, **caractérisé en ce que** les couches de tôle utilisées, pour la mise en place du support d'enroulement (4) et/ou des segments supports (2, 3, 33, 34), sont conçues à partir de paquets de tôles préconfigurés et la machine électrique est assemblée par module au moins partiellement à partir de ces paquets de tôles.

3. Machine électrique selon l'une des revendications précédentes, **caractérisé en ce que** les supports d'enroulement (4) insérés dans les cavités (6) de la machine électrique sont enroulés déjà complètement, de préférence à la machine, avant leur montage respectif.

4. Machine électrique selon la revendication 3, **caractérisé en ce que** les supports d'enroulement (4) sont conçus respectivement comme corps profilé avec une tête de bobine (11) et un noyau polaire (7).

5. Machine électrique selon la revendication 3 ou 4, **caractérisé en ce que** les supports d'enroulement (4) sont reliés chacun de façon résistante au fonctionnement mais amovible, de préférence au moyen de broches emboîtables (10), au corps de logement (2, 3) respectif.

6. Machine électrique selon l'une des revendications précédentes 3 à 5, **caractérisé en ce que** la surface, dirigée vers la culasse du corps de logement, du support d'enroulement (4) est pourvue respectivement d'un porte-à-faux, qui est en prise, dans le cas d'un montage correct, avec une rainure de guidage correspondante dans la zone de guidage du corps de logement.

7. Machine électrique selon l'une des revendications précédentes 3 à 6, **caractérisée en ce que** plusieurs enroulements pouvant être différenciés, sont disposés sur au moins une partie des supports d'enroulement (4).

8. Machine électrique selon l'une des revendications 3 à 7 précédentes, **caractérisé en ce que** les supports d'enroulement (4) sont pourvus d'un enroulement à fil plat.

9. Machine électrique selon l'une des revendications précédentes, **caractérisée en ce que** les segments supports (2, 3, 33, 34) conçus à partir de paquets de tôles stratifiés sont réalisés de telle sorte que les couches individuelles sont disposées avec un décalage, en laissant libre les cavités (6) prévues pour le logement des supports d'enroulement (4), de telle sorte que chaque couche individuelle de chaque segment support (2, 3, 22, 33, 34) est conçue à son tour par segment, vue sur le pourtour ou la longueur de la machine électrique, et que les segments d'une couche par rapport à la couche respectivement voisine sont disposés en décalage, de préférence d'un pas polaire.

10. Machine électrique selon la revendication 9, **caractérisé en ce que** le nombre des couches de tôle utilisées respectivement pour la structure des corps de logement (2, 3, 33, 34) peut être choisi librement en fonction de la puissance de machine respectivement exigée.

11. Machine électrique selon la revendication 9 ou 10, **caractérisé en ce que** les segments supports (2, 3, 33, 34) sont composés chacun de couches de tôles de transformateur découpées à la matrice en forme de dent, de préférence à partir de tôle à grains orientés.

12. Machine électrique selon l'une des revendications 9 à 11, **caractérisé en ce que** les segments supports sont dotés aussi bien sur le côté tourné vers l'intérieur de la machine que sur le côté tourné vers l'extérieur de la machine, répartis sur le pourtour, de cavités (6) pour le logement de supports d'enroulement (4) pour la mise en place d'une machine électrique compensée.

13. Utilisation de la machine électrique structurée par segments selon les revendications 1 à 12 comme moteur linéaire à l'intérieur d'un axe de manipulation fermé.

14. Utilisation de la machine électrique structurée par segments selon les revendications 1 à 12 comme moteur à induit intérieur ou moteur à induit extérieur, moteur linéaire, machine synchrone ou asynchrone, entraînement direct, machine excitée de façon permanente ou machine commutée de façon électrique.
